# EUROPEAN PATENT APPLICATION

(11) **EP 1 974 888 A1**
(43) Date of publication of application: **01.10.2008**
(21) Application number: 08153372.1
(22) Date of filing: 27.03.2008
(51) Int. Cl.: B29C 45/17, B29C 45/23

(54) **Injection mold nozzle structure**

(30) Priority: 29.03.2007 JP 2007088729
(71) Applicant: AISIN SEIKI KABUSHIKI KAISHA, Kariya-shi, Aichi-ken 448-8650 (JP)
(72) Inventor: Kasahara, Hideya Aisin Seiki KK, Kariya-shi, Aichi 448-8650 (JP); Kawasaki, Mitsutoshi, Kariya-shi, Aichi 448-8605 (JP); Miyako, Hiroyuki, Nogata-shi, Fukuoka (JP); Haga, Zenku, Nogata-shi, Fukuoka (JP)
(74) Representative: TBK-Patent

(57) **Abstract**

An injection mold nozzle structure is provided. The injection mold nozzle structure includes a split mold (10) and an opposing split mold (11) which form a molding cavity (12) for molding a molded product; a nozzle (5) which includes a nozzle hole (51) having a tip opening (52), from which injection molding material is injected into the molding cavity (12); and a nozzle pin (6) which is movable with respect to the nozzle along an axis of the nozzle hole (51) and is configured to open and close the tip opening of the nozzle hole according to the movement. The nozzle is enterable into a large recess portion (3) of the split mold. The nozzle pin includes a pin tip surface (60) configured to face the molding cavity (12) and form a part of a surface of the molding cavity when the nozzle (5) enters the large recess portion (3).

## Description

### BACKGROUND OF THE INVENTION

1. Field of the Invention

The present invention relates to injection mold nozzle structure used in injection molding.

2. Description of the Related Art

Japanese Patent No. 3146476 describes a molding apparatus in which a sprue bush having a sprue is attached to the opposite side to a molding cavity side of a split mold, and molding material ejected from a nozzle is supplied through the sprue of the sprue bush into the molding cavity. Further, JP-A-2001-30054 describes a metallic mold for light metal injection molding in which a sprue bush having a sprue is attached to a split mold, and a molding material of melting light metal ejected from a long nozzle is supplied through the sprue of the sprue bush into the molding cavity. Furthermore, JP-A-2001-334551 describes an injection molding apparatus in which a nozzle adapter different member from a nozzle is provided. The injection molding apparatus injection molds melting resin through the nozzle and the nozzle adapter in a state where the nozzle adapter is attached to a tip portion of the nozzle. This apparatus can readily meet both a cold-runner mold and a hot-runner mold.

In any of the above related-art apparatuses, a nozzle tip surface that is a tip portion of the nozzle does not face a molding cavity which molds a molded product. Accordingly, there is required a sprue bush having a sprue for introducing injection molding material to the molding cavity of a split mold.

### SUMMARY OF THE INVENTION

The present invention has been made in view of the above circumstances, and its object is to provide injection mold nozzle structure in which a nozzle can be moved to the interior of a recess portion of a split mold, and disuse of a sprue bush having a sprue can be realized.

According to an aspect of the present invention, there is provided an injection mold nozzle structure including: a split mold and an opposing split mold which form a molding cavity for molding a molded product; a nozzle which has a cylindrical shape and includes a nozzle hole having a tip opening, from which injection molding material is injected into the molding cavity; and a nozzle pin which is movable with respect to the nozzle along an axis of the nozzle hole and is configured to open and close the tip opening of the nozzle hole according to the movement. The split mold includes: a small recess portion including a gate opening which faces the molding cavity; a large recess portion communicating with the small recess portion and including an entry opening at opposite side to the molding cavity, the entry opening having an inner diameter larger than that of the gate opening; and a seating surface extending in a centrifugal direction about an axis of the large recess portion. The nozzle is enterable into the large recess portion from the entry opening so that at least part of the nozzle is housed in the large recess portion and includes a contact surface configured to contact with and mounted on the seating surface when the nozzle enters the large recess portion. The nozzle pin includes a pin tip surface configured to face the molding cavity and form a part of a surface of the molding cavity when the nozzle enters the large recess portion.

According to this configuration, the nozzle is provided enterably in the large recess portion from the entry opening of the split mold so that the tip portion of the nozzle is housed into the large recess portion. The contact surface of the nozzle is made contactable with the seating surface of the split mold in the nozzle entering time. Accordingly, in the nozzle entering time, the nozzle having the nozzle pin enters the inside of the large recess portion of the split mold. Hereby, the contact surface of the nozzle is brought into contact with the seating surface of the split mold and mounted on the seating surface. Hereby, the tip portion of the nozzle can be brought as close to the molding cavity of the split mold as possible. In a state where the nozzle is thus mounted on the seating surface in the large recess portion of the split mold, the injection molding material is directly supplied from the tip opening of the nozzle into the molding cavity. Therefore, disuse of the sprue bush having the sprue in the split mold can be realized. In result, product yield can be improved.

Further, since the disuse of the sprue brush can be realized as described above, the distance at which the injection molding material flows is reduced. Therefore, in case that a dwelling step is executed for the injection molding material in the molding cavity, efficiency of the dwelling can improve. Accordingly, the pressure in the dwelling step can be reduced, so that load on the injection molding machine side can be reduced.

### BRIEF DESCRIPTION OF THE DRAWINGS

The above and other aspects of the present invention will become more apparent and more readily appreciated from the following description of exemplary embodiments of the present invention taken in conjunction with the attached drawings, in which:

Fig. 1 is a longitudinal sectional view showing a state before a nozzle having a nozzle pin enters a large recess portion of a split mold according to a first exemplary embodiment;

Fig. 2 is a longitudinal sectional view showing a state in which the nozzle having the nozzle pin has entered into the large recess portion of the split mold according to the first exemplary embodiment;

Fig. 3 is a longitudinal sectional view showing a state in which a tip opening of a nozzle hole of the nozzle is opened, and injection molding material is injected from the tip opening of the nozzle hole according to the first exemplary embodiment;

Fig. 4 is a longitudinal sectional view showing a state in which the tip opening of the nozzle hole of the nozzle is closed, and injection molding ends according to the first exemplary embodiment;

Fig. 5 is a longitudinal sectional view showing a state before a nozzle having a nozzle pin enters a large recess portion of a split mold according to a second exemplary embodiment;

Fig. 6 is a longitudinal sectional view showing a state in which the nozzle having the nozzle pin has entered into the large recess portion of the split mold according to the second exemplary embodiment;

Fig. 7 is a longitudinal sectional view showing a state in which a tip opening of a nozzle hole of the nozzle is opened, and injection molding material is injected from the tip opening of the nozzle hole according to the second exemplary embodiment;

Fig. 8 is a longitudinal sectional view showing a state in which the tip opening of the nozzle hole of the nozzle is closed, and injection molding ends according to the second exemplary embodiment.

Fig. 9 is a longitudinal sectional view showing a state in which a tip opening of a nozzle hole of a nozzle is closed, and injection molding ends according to a third exemplary embodiment;

Fig. 10 is a transverse sectional view showing a state in which a tip opening of a nozzle hole of a nozzle is closed, and injection molding ends according to a fourth exemplary embodiment; and

Fig. 11 is a longitudinal sectional view showing a state in which a tip opening of a nozzle hole of a nozzle is closed, and injection molding ends according to a fifth exemplary embodiment.

### DETAILED DESCRIPTION OF EXEMPLARY EMBODIMENTS OF THE PRESENT INVENTION

According to an aspect of the present invention, a split mold and an opposing split mold form a molding cavity for molding a molded product. The nozzle has a nozzle hole from which injection molding material is injected into the molding cavity, and has the cylindrical shape. As the injection molding material, a resin-based material and a rubber-based material are used as an example, and a reinforcement material such as glass fiber may be included therein. A nozzle pin is also referred to as a valve pin, which opens and closes a tip opening of the nozzle hole according to movement of the nozzle pin. The nozzle pin is provided along an axis of the nozzle hole movably with respect to the nozzle. When the tip opening of the nozzle opening is opened by the nozzle pin, the injection molding material is injected from the tip opening of the nozzle hole into the molding cavity.

The split mold includes a small recess portion having a gate opening that faces the molding cavity; a large recess portion which is communicates with the small recess portion and which has an entry opening at opposite side to the molding cavity, the entry opening having the inner diameter that is larger than the inner diameter of the gate opening; and a seating surface extending in a centrifugal direction about an axis of the large recess portion.

The nozzle is enterable from the entry opening of the split mold into the large recess portion so that at least a tip portion of the nozzle is housed. The nozzle has a contact surface which comes into contact with the seating surface of the split mold in the injection molding time. The nozzle pin has a pin tip surface which faces the molding cavity in the injection molding time and forms a part of a surface of the molding cavity.

According to an aspect of the present invention, a heat-insulated space for suppressing heat transmission from the nozzle to the split mold may be formed between the outer peripheral of the nozzle and the inner peripheral of the large recess portion of the split mold. According to this configuration, the heat transmission to the split mold from the nozzle into which injection molding material is poured is suppressed. Therefore, excessive cooling of the injection molding material in the nozzle hole of the nozzle is suppressed, and a defect of a molded product is suppressed.

According to an aspect of the present invention, the nozzle may have a nozzle tip surface which faces the molding cavity and forms a part of the surface of the molding cavity when the nozzle enters the large recess portion of the split mold. This case is effective to realize disuse of a sprue bush having a sprue.

According to an aspect of the present invention, when the tip opening of the nozzle hole of the nozzle is closed, the nozzle tip portion of the nozzle pin may enter the small recess portion of the split mold and face the molding cavity, but the tip portion of the nozzle may not enter the small recess portion. In this case, the pin tip surface that is the tip portion of the nozzle pin forms a part of the surface of the molding cavity. In this case, the tip opening of the nozzle can be brought as close to the molding cavity as possible. Therefore, it is possible to realize disuse of the sprue bush having the sprue.

According to an aspect of the present invention, when the tip opening of the nozzle hole of the nozzle is closed, the tip surface of the nozzle pin may enter the small recess portion of the split mold and the tip portion of the nozzle may enter the small recess portion and faces the molding cavity. In this case, the pin tip surface that is the tip portion of the nozzle pin forms a part of the surface of the molding cavity, and also the nozzle tip surface that is the tip portion of the nozzle forms a part of the surface of the molding cavity. In this case, the tip opening of the nozzle can be brought as close to the molding cavity as possible. Therefore, it is possible to realize disuse of the sprue bush having the sprue. Further, a platen for attaching the split mold to an injection molding machine may be provided. It is advantageous that the platen has a nozzle recess portion which the nozzle enters.

[First exemplary embodiment]

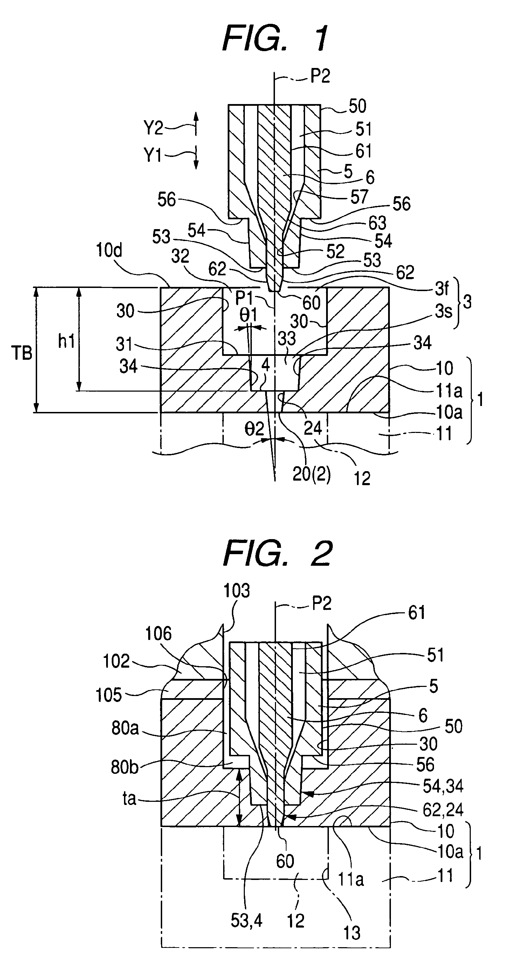

A first exemplary embodiment of the present invention will be described with reference to Figs. 1 to 4. An injection mold nozzle structure according to the first exemplary embodiment includes a mold 1 having a split mold 10 and an opposing split mold 11, a nozzle 5, and a nozzle pin 6. The split mold 10 functions as an upper mold, and forms a molding cavity 12 which molds a molded product together with the opposing split mold 11 (lower mold). In the clamping time, a parting face 10a of the split mold 10 comes into contact with an opposing parting face 11a of the opposing split mold 11. The nozzle 5 has the cylindrical shape having an axis P2 and a circular section, and includes a nozzle hole 51 from which injection molding material such as resin is injected into the molding cavity 12. The nozzle pin is also referred to as a valve pin, which opens and closes a tip opening 52 of the nozzle hole 51 according to movement. The nozzle pin 6 is provided along an axis P2 of the nozzle hole 51 of the nozzle 5 movably with respect to and coaxially with the nozzle 5.

As shown in Fig. 1, the split mold 10 includes a small recess portion 2 facing the molding cavity 12, a large recess portion 3 communicating with the small recess portion 2, and a seating surface 4. The small recess portion 2 is a passage which can function as a gate, is provided on the opposing split mold 11 side of the split mold 10, penetrates the split mold 10 in a direction of gravity (direction of arrows Y1 and Y2), and has a gate opening 20 which faces directly the molding cavity 12. The large recess portion 3 has a function of housing a tip portion of the nozzle 3, and includes a first large recess portion 3f having a mold inner peripheral portion 30 formed in the right cylindrical shape, a second large recess portion 3s which communicates coaxially with the first large recess portion 3f and has a smaller diameter than a diameter of the first large recess portion 3f, and an opposite surface 31 extending in a horizontal direction.

As shown in Fig. 1, the opposite surface 31 is formed between the first large recess portion 3f and the second large recess portion 3s, and formed in the shape of a flange extending in a centrifugal direction (axial right angle direction) about an axis P1 of the large recess portion 3. As shown in Fig. 1, the first large recess portion 3f has a first entry opening 32 which opens to a surface 10d on the opposite side to the molding cavity 12 side of the split mold 10, and the mold inner peripheral portion 30 formed around the axis P1 so as to face a cavity of the first large recess portion 3f. The second large recess portion 3s has a second entry opening 33 which opens to the first large recess portion 3f, and a first guide surface 34 which is formed around the axis P1 in the shape of a circular cone. As shown in Fig. 1, the inner diameter of the first entry opening 32 is made larger than the inner diameter of the second entry opening 33. The inner diameter of the first entry opening 32 and the inner diameter of the second entry opening 33 are made larger than the inner diameter of the gate opening 20.

As shown in Fig. 1, the seating surface 4 of the split mold 10 lies between the second large recess portion 3s of the large recess portion 3 of the split mold 10 and the small recess portion 2 thereof. Namely, the seating surface 4 is formed between the gate opening 20 and the second entry opening 33 (opposite surface 31). The seating surface 4 is formed in the shape of a ring flange extending in the centrifugal direction (axial right angle direction) about the axis P1 of the large recess portion 3 of the split mold 10. As shown in Fig. 1, when a thickness of the split mold 10 is TB, and a depth from the surface 10d on the opposite side to the molding cavity 12 side of the split mold 10 to the seating surface 4 is h1, h1 is set to TB × α (h1= TB × α) . The value α can be set within a range of 0.6 to 0.95, 0.65 to 0.90, or 0.75 to 0.80. Hereby, the tip portion of the nozzle 5 can be brought close to the molding cavity 12.

As shown in Fig. 1, the second large recess portion 3s has the first guide surface 34 which is formed around the axis P1 in the shape of a circular cone. The small recess portion 2 has a second guide surface 24 which is formed around the axis P1 in the shape of a circular cone so as to form a parting plane of the injection molding material. Each of the first guide surface 34 and the second guide surface 24 is inclined so that the inner diameter becomes gradually smaller toward the gate opening 20 and the molding cavity 12 (downward).

As shown in Fig. 1, the nozzle includes a nozzle outer peripheral portion 50, a contact surface 53 which comes into contact with the seating surface 4 of the split mold 10 in the nozzle entering time (injection molding time), a nozzle guide surface 54 connecting to the outer peripheral side of the contact surface 53, an opposed surface 56 which is opposed to the opposite surface 31, and a nozzle conical inner wall surface 57 facing the nozzle hole 51. The contact surface 53 and the opposed surface 56 extend respectively in a centrifugal direction (axial right angle direction) about the axis P2 of the nozzle 5 in the shape of a ring flange. The nozzle guide surface 54 is formed around the axis P2, and formed conically so that its outer diameter becomes gradually smaller toward the contact surface 53 of the nozzle 5 (toward the gate opening 20) .

In the first exemplary embodiment, an inclined angle of the nozzle guide surface 54 to the axis P2 corresponds to an inclined angle θ1 described later. An inclined angle of the pin guide surface 62 to the axis P2 corresponds to an inclined angle θ2 described later. The nozzle 5 is provided enterably into the large recess portion 3 so that the tip portion of the nozzle 5 is housed from the first entry opening 32 of the split mold 10 into the large recess portion 3.

As shown in Fig. 1, the nozzle pin 6 includes a pin tip surface 60 located on a tip side of the nozzle pin 6, a pin peripheral portion 61, a pin guide surface 62 forming the outer peripheral surface, and a pin conical outer wall surface 63 which faces the nozzle conical inner wall surface 57 of the nozzle 5. The pin tip surface 60 of the nozzle pin 6 is extended in a centrifugal direction (axial right angle direction) about the axis P2 of the nozzle 5. The pin tip surface 60 of the nozzle pin 6 faces the molding cavity 12 in the nozzle entering time (injection molding time) and forms a part of a cavity mold surface 13. The pin guide surface 62 is inclined so that its outer diameter becomes smaller toward the pin tip surface 60 of the nozzle pin 6.

A case where injection molding is executed will be described. First, as shown in Fig. 1, the nozzle 5 having the nozzle pin 6 waits in a state where the nozzle 5 is spaced apart from the split mold 10. Under the standby state, the pin tip surface 60 of the nozzle pin 6 is protruded from the contact surface 53 of the nozzle 5 toward the split mold 10 in the direction of the arrow Y1 (downward) (refer to Fig. 1). Next, the nozzle 5 having the nozzle pin 6 is moved toward the split mold 10 in the direction of the arrow Y (downward). In result, as known from Fig. 2, the guide surface 54 of the nozzle 5 is guided to the first guide surface 34 of the split mold 10. Hereby, alignment (rough alignment) of the nozzle 5 in a diametric direction is performed, so that coaxial property between the axis P2 of the nozzle 5 and the axis P1 of the large recess portion 3 of the split mold 10 is improved. Thereafter, the pin guide surface 62 of the nozzle pin 6 is guided to the second guide surface 24 of the small recess portion 2 of the split mold 10. Hereby, the alignment (fine alignment) of the nozzle pin 6 and, in its turn, the nozzle 5 in the diametric direction are further performed, so that the coaxial property between the axis P2 of the nozzle 5 and the axis P1 of the large recess portion 3 of the split mold 10 is improved more.

In case that the axis P2 of the nozzle 5 and the axis P1 of the large recess portion 3 of the split mold 10 are aligned, it is advantageous that the impact in the aligning time is reduced as much as possible. In consideration of this point, in the first exemplary embodiment, θ1 is set smaller than θ2 (θ1 < θ2), where θ1 is an inclined angle of the first guide surface 34 in the split mold 10 to the axis P1, and θ2 is an inclined angle of the second guide surface 24 in the split mold 10 to the axis P1. For example, θ1 is set to 3°, and θ2 is set to 5°. When timing in which the nozzle guide surface 54 of the nozzle 5 comes into contact with the first guide surface 34 of the split mold 10 and align-guided is t1 and timing in which the pin guide surface 62 of the nozzle pin 6 comes into contact with the second guide surface 24 of the split mold 10 and align-guided is t2, the timing t1 is earlier than the timing t2.

Therefore, the alignment (rough alignment) of the nozzle 5 is performed by the first guide surface 34 having the inclined angle θ1 which is gentle, and thereafter the pin guide surface 62 of the nozzle pin 6 is brought into contact with the second guide surface 24 having the inclined angle θ2 which is sharper than the inclined angle θ1 and further subjected to the alignment (fine alignment). In case of the inclined angle θ1 which is smaller than the inclined angle θ2, the impact in the alignment time is smaller.

Therefore, though the nozzle 5 and the nozzle pin 6 are aligned with the axis P1 of the large recess portion 3 of the split mold 10, the impact caused when the pin guide surface 62 abuts on the second guide surface 24 of the split mold 10 can be reduced as much as possible. Here, the second guide surface 24 of the split mold 10 exhibits an important function as a flush trimming surface. Protective property and durability of the second guide surface 24 exhibiting such the important function can improve.

According to the first exemplary embodiment, after the axis P2 of the nozzle 5 has been aligned with the axis P1 of the large recess portion 3 of the split mold 10 as described above, as shown in Fig. 2, the contact surface 53 of the nozzle 5 comes into contact with the seating surface 4 of the split mold 10 and mounted on the seating surface 4. In the state where the contact surface 53 of the nozzle 5 is thus mounted on the seating surface 4, as shown in Fig. 2, the pin tip surface 60 on the tip side of the nozzle pin 6 faces directly the molding cavity 12, and forms a part of a cavity mold surface 13 forming the molding cavity 12. Further, as shown in Fig. 2, between the mold inner peripheral portion 30 of the split mold 10 and the nozzle outer peripheral portion of the nozzle 5, a cylindrical heat-insulated space 80a is formed. Also between the opposite surface 31 of the split mold 10 and the opposed surface 56 of the nozzle 5, a cylindrical heat-insulated space 80b is formed. Therefore, the contact area between the nozzle 5 and the split mold 10 is reduced. In result, it is restrained that the heat of the nozzle 5 on the relatively high temperature side is taken by the split mold 10 on the relatively low temperature side. Accordingly, it is restrained that the heat of the injection molding material in the nozzle hole 51 is taken by the split mold 10, so that poor molding of the molded product is reduced. Further, as shown in Fig. 2, the nozzle guide surface 54 of the nozzle 5 comes or substantially comes into contact with the first guide surface 34 of the split mold 10. The pin guide surface 62 of the nozzle pin 6 comes or substantially comes into contact with the second guide surface 24 of the small recess portion 2 of the split mold 10. Hereby, holding property and a posture of the nozzle 5 in the nozzle entering time (injection molding time) are maintained.

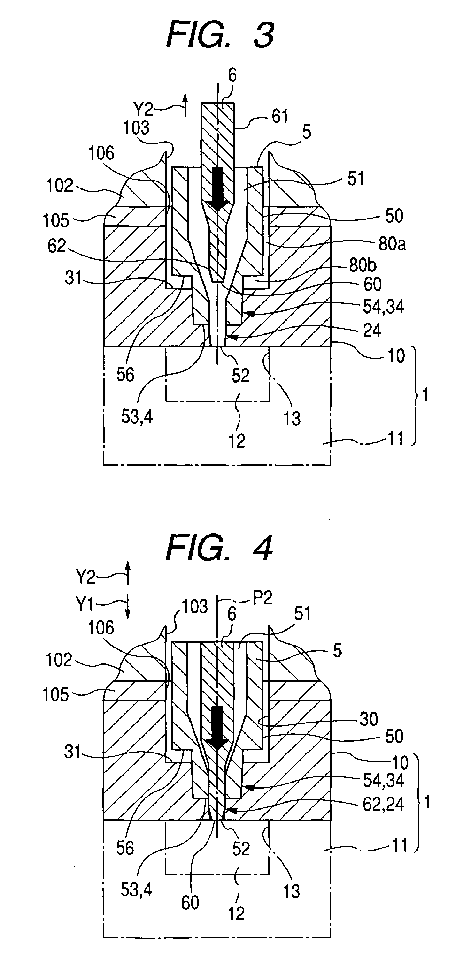

Next, as shown in Fig. 3, the nozzle pin 6 is moved in the direction of the arrow Y2 (upward) so as to be spaced away from the split mold 10, and the tip opening 52 of the nozzle 5 is opened. In the state where the tip opening 52 of the nozzle 5 is thus opened, a pouring step of pouring resin-based injection molding material having fluidity through the nozzle hole 51 and the tip opening 52 into the molding cavity 12 at a predetermined injection molding pressure is executed by an injection molding machine (not shawn). Though the injection molding pressure is about 100MPa in a molded product by the related art, it is reduced to about 50 MPa in a molded product in this exemplary embodiment. After the injection molding material has been thus poured into the molding cavity 12, a dwelling step of adding the pressure on the injection molding machine side to the injection molding material in the molding cavity 12 is executed in the state where the tip opening 52 of the nozzle 5 is opened.

After the dwelling step has been executed, as shown in Fig. 4, the nozzle pin 6 is moved toward the split mold 10 in the direction of the arrow Y1 (downward) thereby to close the tip opening 52 of the nozzle 5. Here, the pin tip surface 60 of the nozzle pin 6 faces a part of the molding cavity 12 and forms a part of the cavity mold surface 13. Hereby, the injection molding ends. Next, the nozzle 5 is moved from the split mold 10 in the direction of the arrow Y2 (upward) together with the nozzle pin 6. Further, the split mold 10 and the opposing split mold 11 are released, and a molded product in the molding cavity 12 is taken out.

A platen 102 for attaching the split mold 10 to the injection molding machine is provided. Between the platen 102 and the split mold 10, a plate-shaped heat-insulated member 105 is arranged. The platen 102 has a nozzle recess portion 103 formed in the shape of a through-hole, which the nozzle 5 enters. The heat-insulated material 105 has a nozzle recess portion 106 formed in the shape of a through-hole, which the nozzle 5 enters. Hereby, the structure in which the nozzle 5 enters the inside of the split mold 10 is adopted.

According to the first exemplary embodiment, the nozzle 5 is provided enterably into the large recess portion 3 from the first entry opening 32 of the slit mold 10 so that the tip portion of the nozzle 5 is housed into the large recess portion 3. The nozzle 5 has the contact surface 53 which comes into contact with and is mounted on the seating surface 4 of the split mold 10 in the injection molding time (in the entering time). Accordingly, in the injection molding time, the nozzle 5 having the nozzle pin 6 enters the inside of the large recess portion 3 of the split mold 10, and the contact surface 63 of the nozzle 5 is brought into contact with the seating surface 4 of the split mold 10 and mounted on the seating surface 4. From the tip opening 52 of the nozzle 5 which has thus entered the inside of the large recess portion 3 of the slit mold 10, the resin-based injection molding material is directly supplied into the molding cavity 12 of the mold 1. Therefore, in the split mold 10 of the mold 1, the nozzle 5 can enter the interior where the nozzle 5 comes close to the molding cavity 12. Accordingly, the tip opening of the nozzle 5 can be brought as close to the molding cavity 12 as possible, so that disuse of a sprue bush having a sprue can be realized. Further, disuse of a runner connecting the sprue and the molding cavity 12 can be also realized. Therefore, product yield can be improved.

The disuse of not only the sprue bush but also the runner can be realized as described above, which is advantageous to suppress cooling of the injection molding material. In this meaning, poor molding can reduced. Further, when the dwelling step of applying a pressure to the injection molding material in the molding cavity 12 is executed, since the disuse of both the sprue brush and the runner is realized, the flow distance of the injection molding material is reduced, the efficiency of the pressure can improve, and the pressure in the dwelling step can be reduced more than that in the related art. According to a test example, though the pressure in the dwelling step is 25 MPA in the conventional molded product, the pressure in the dwelling step can be made 15 MPa in a molded product in the exemplary embodiment while their molded products keep the same quality.

The second guide surface 24 of the split mold 10 exists near the molding cavity 12 in which the injection molding material is filled, and constitutes an important flash trimming surface. Therefore, even in case that a period of use is long, it is preferable that wearing-out and galling in the second guide surface 24 is reduced.

Regarding this point, according to the exemplary embodiment, as described before, when the contact surface 53 of the nozzle 5 is mounted on the seating surface 4 of the split mold 10, firstly, the alignment (rough alignment) of the nozzle 5 is performed by the first guide surface 34 having the inclined angle θ1 which is gentle, and thereafter the pin guide surface 62 of the nozzle pin 6 is brought into contact with the second guide surface 24 having the inclined angle θ2 which is sharper than the inclined angle θ1 and further subjected to the alignment (fine alignment). In case of the inclined angle θ1 which is smaller than the inclined angle θ2, the impact in the alignment time is smaller. Therefore, though the nozzle 5 and the nozzle pin 6 are aligned with the axis P1 of the large recess portion 3 of the split mold 10, the impact caused when the pin guide surface 62 of the nozzle pin 6 abuts on the second guide surface 24 of the split mold 10 can be reduced as much as possible. Therefore, the impact reduction is advantageous to reduce wearing-out and galling in the second guide surface 24 exhibiting the important function as the flash trimming surface, so that long lifetime of the second guide surface 24 can be realized.

Further, according to the exemplary embodiment, as shown in Figs. 1 to 4, the large recess portion 3 includes the first large recess portion 3f which is relatively large in inner diameter and cavity volume, and the second large recess portion 3s which is relatively small in inner diameter and cavity volume. Therefore, in the split mold 10, the first large recess portion 3f which is larger in cavity volume can be kept as away from the molding cavity 12 as possible. Accordingly, though the large recess portion 3 for seating the nozzle 5 is formed in the split mold 10, the thickness ta (refer to Fig. 2) of the split mold 10 can be secured as much as possible, and mold rigidity of the split mold 10 can improve.

According to the exemplary embodiment, since the pin tip surface 60 of the nozzle pin 6 forms a part of the cavity mold surface 13, in case that a concave or convex mark part (marking) is formed on the pin tip surface 60, the mark part can be transferred to a molded product in the injection molding time.

[Second exemplary embodiment]

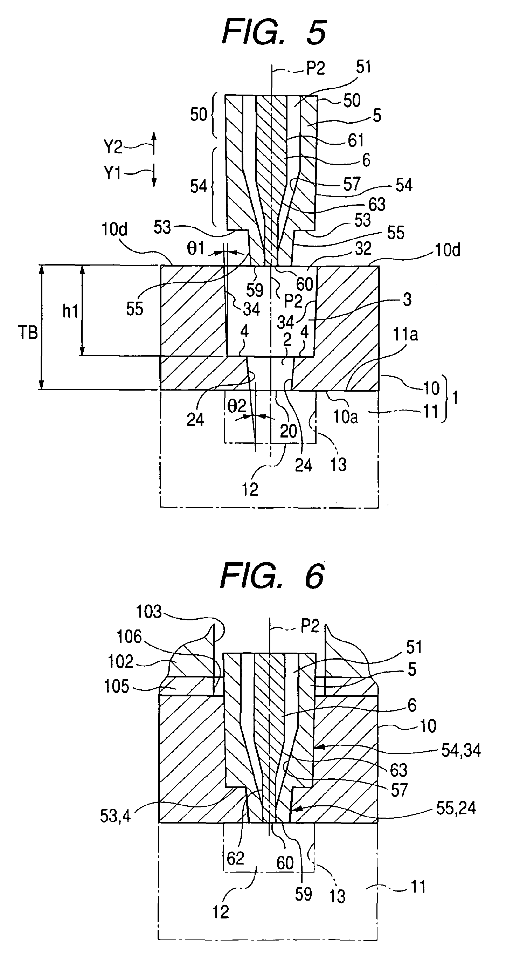

A second exemplary embodiment of the present invention will be described with reference to Figs. 5 to 8. This exemplary embodiment has basically similar constitution to that in the first exemplary embodiment, and has the similar operational advantage to that in the first exemplary embodiment. Portions having common functions are denoted by common reference numerals. As shown in Fig. 5, injection mold nozzle structure according to the second exemplary embodiment includes a mold 1 having a split mold 10 and the opposing split mold 11, a nozzle 5, and a nozzle pin 6. The split mold 10 functions as an upper mold, and forms a molding cavity 12 which molds a molded product together with the opposing split mold 11 (lower mold). In the mold clamping time, a parting face 10a of the split mold 10 comes into contact with an opposing parting face 11a of the opposing split mold 11. Further, the split mold 10 is a fixed mold, and the opposing split mold 11 is a movable mold. The nozzle 5 has the cylindrical shape having an axis P2 and a circular section, is formed of metal or ceramics, and includes a nozzle hole 51 from which injection molding material such as resin is injected into the molding cavity 12. The nozzle pin 6 is provided along the axis P2 of a nozzle hole 51 of the nozzle 5 movably in the direction of arrows Y1 and Y2 and coaxially with the nozzle 5, and formed of metal or ceramics.

As shown in Fig. 5, the split mold 10 includes a small recess portion 2 facing the molding cavity 12, a large recess portion 3 communicating with the small recess portion 2, and a seating surface 4. The small recess portion 2 is provided on the opposing split mold 11 side of the split mold 10, and has a gate opening 20 facing directly the molding cavity 12. As shown in Fig. 5, the large recess portion 3 has an entry opening 32 which opens to a surface 10d on the opposite side to the molding cavity 12 side of the split mold 10, and a first guide surface 34 which is formed in the shape of a circular cone and formed around an axis P1 so as to face a cavity of the large recess portion 3. Here, as shown in Fig. 5, the inner diameter of the entry opening 32 is made larger than the inner diameter of the gate opening 20.

As shown in Fig. 5, the seating surface 4 of the split mold 10 lies between the large recess portion 3 of the split mold 10 and the small recess portion 2 thereof. The seating surface 4 is formed in the shape of a ring flange extending in the centrifugal direction (axial right angle direction) about the axis P1 of the large recess portion 3 of the split mold 10.

As shown in Fig. 5, when a thickness of the split mold 10 is TB, and a depth from the surface 10d on the opposite side to the molding cavity 12 side of the split mold 10 to the seating surface 4 is h1, h1 is set to TB × α (h1= TB × α). The value α can be set within a range of 0.6 to 0.95, 0.65 to 0.90, or 0.75 to 0.80. Thus, the nozzle 5 can be brought as close to the molding cavity 12 as possible.

The large recess portion 3 has a first guide surface 34 which is formed around the axis P1 in the shape of a circular cone. The small recess portion 2 has a second guide surface 24 which is formed around the axis P1 in the shape of a circular cone so as to form a parting plane of the injection molding material. Each of the first guide surface 34 and the second guide surface 24 is inclined so that the inner diameter becomes gradually smaller toward the gate opening 20 and the molding cavity 12.

As shown in Fig. 5, the nozzle 5 includes a nozzle peripheral portion 50, a contact surface 53 which comes into contact with the seating surface 4 of the split mold 10 in the nozzle entering time (injection molding time), a first nozzle guide surface 54 connecting from the outer peripheral side of the contact surface 53 in a direction spaced apart from the split mold 10, a second nozzle guide surface 55 connecting from the inner peripheral side of the contact surface 53 in an approach direction to the split mold 10, a nozzle conical inner wall surface 57 facing the nozzle hole 51, and a nozzle tip surface 59. As shown in Fig. 5, the contact surface 53 extends in a centrifugal direction (axial right angle direction) about the axis P2 of the nozzle 5 in the shape of a ring flange. The nozzle tip surface 59 extending in a centrifugal direction (axial right angle direction) about the axis P2 of the nozzle 5. The first nozzle guide surface 54 is formed around the axis P2 of the nozzle 5, and formed conically so that its outer diameter becomes gradually smaller toward the contact surface 53 of the nozzle 5. The second nozzle guide surface 55 is formed around the axis P2, and formed conically so that its outer diameter becomes gradually smaller toward the gate opening 20 from the contact surface 53 of the nozzle 5.

Here, an inclined angle of the first nozzle guide surface 54 to the axis P2 corresponds to an inclined angle θ1. An inclined angle of the second nozzle guide surface 55 to the axis P2 corresponds to an inclined angle θ2. A nozzle tip surface 59 on the tip side of the nozzle 5 faces the molding cavity 12 in the injection molding time, and forms a part of a cavity mold surface 13. The nozzle 5 is provided enterably into the large recess portion 3 from the entry opening 32 of the split mold 10 so that the tip portion of the nozzle 5 is housed into the large recess portion 3.

As shown in Fig. 5, the nozzle pin 6 includes a pin tip surface 60, a pin peripheral portion 61, a pin guide surface 62, and a pin conical outer wall surface 63 which faces the nozzle conical inner wall surface 57 of the nozzle 5. The pin guide surface 62 is formed into a conical surface which is inclined at a very small angle so that its outer diameter becomes smaller toward the pin tip surface 60. The pin tip surface 60 of the nozzle pin 6 extends in a centrifugal direction (axial right angle direction) about the axis P2 of the nozzle 5. The pin tip surface 60 of the nozzle pin 6 faces the molding cavity 12 in the nozzle entering time (injection molding time) and forms a part of the cavity mold surface 13.

Next, a case where injection molding is executed will be described. First, as shown in Fig. 5, the nozzle 5 having the nozzle pin 6 waits in a state where the nozzle 5 is spaced apart from the split mold 10. Under the standby state, the position (height position) of the pin tip surface 60 of the nozzle pin 6 is aligned with the position (height position) of the nozzle tip surface 59 of the nozzle 5 (refer to Fig. 5). Next, the nozzle 5 having the nozzle pin 6 is moved toward the split mold 10 in the direction of the arrow Y (downward). In result, as known from Fig. 6, the nozzle guide surface 54 of the nozzle 5 is guided to the first guide surface 34 of the split mold 10. Hereby, alignment (rough alignment) of the axis P2 of the nozzle 5 in a diametric direction is performed. Therefore, coaxial property between the axis P2 of the nozzle 5 and the axis P1 of the large recess portion 3 of the split mold 10 is improved. Thereafter, the second nozzle guide surface 55 of the nozzle 5 is guided to the second guide surface 24 of the small recess portion 2 of the split mold 10. Hereby, alignment (fine alignment) of the nozzle 5 in the diametric direction is further performed. In result, the coaxial property between the axis P2 of the nozzle 5 and the axis P1 of the large recess portion 3 of the split mold 10 is improved more.

In case that the axis P2 of the nozzle 5 and the axis P1 of the large recess portion 3 of the split mold 10 are aligned, it is advantageous that impact in the alignment time is reduced as much as possible. In consideration of this point, in the exemplary embodiment, θ1 is set smaller than θ2 (θ1 < θ2), in which θ1 is an inclined angle of the first guide surface 34 in the slit mold 10 to the axis P1, and θ2 is an inclined angle of the second guide surface 24 in the slit mold 10 to the axis P1. For example, θ1 is set to 3°, and θ2 is set to 5°. When timing in which the first nozzle guide surface 54 of the nozzle 5 comes into contact with the first guide surface 34 of the split mold 10 and align-guided is t1 and timing in which the second nozzle guide surface 55 of the nozzle 5 comes into contact with the second guide surface 24 of the split mold 10 and align-guided is t2, the timing t1 is earlier than the timing t2. Therefore, the alignment (rough alignment) of the nozzle 5 is performed by the first guide surface 34 having the inclined angle θ1 which is gentle, and thereafter the pin guide surface 62 of the nozzle pin 6 is brought into contact with the second guide surface 24 having the inclined angle θ2 which is sharper than the inclined angle θ1 and the nozzle 5 is further subjected to the alignment (fine alignment). In case of the inclined angle θ1 which is smaller than the inclined angle θ2, the impact in the alignment time is smaller. Therefore, according to the second exemplary embodiment, though the nozzle 5 is aligned with the axis P1 of the large recess portion 3 of the split mold 10, the impact caused when the second nozzle guide surface 55 of the nozzle 5 abuts on the second guide surface 24 of the split mold 10 can be reduced as much as possible.

As described above, after the axis P2 of the nozzle 5 has been aligned with the axis P1 of the large recess portion 3 of the split mold 10, as understood from Fig. 6, the contact surface 53 of the nozzle 5 comes into contact with the seating surface 4 of the split mold 10 and is mounted. In the state where the contact surface 53 of the nozzle 5 is thus mounted on the seating surface 4, as shown in Fig. 6, the pin tip surface 60 located at the tip of the nozzle pin 6 faces directly the molding cavity 12, and forms a part of the cavity mold surface 13 forming the molding cavity 12. Further, the nozzle tip surface 59 located at the tip of the nozzle 5 faces directly the molding cavity 12, and forms a part of the cavity mold surface 13 forming the molding cavity 12.

Further, as shown in Fig. 6, the first nozzle guide surface 54 of the nozzle 5 comes or substantially comes into contact with the first guide surface 34 of the split mold 10. The second nozzle guide surface 55 of the nozzle 5 comes or substantially comes into contact with the second guide surface 24 of the split mold 10. Hereby, holding property and a posture of the nozzle 5 in the injection molding time are satisfactorily maintained. Further, since the contact area of the nozzle 5 and the split mold 10 increases, cooling of injection molding material is easily to be promoted. Therefore, it is also possible to form the nozzle 5 of material which is lower in thermal conductivity (for example, stainless steel) than the material of the split mold 10.

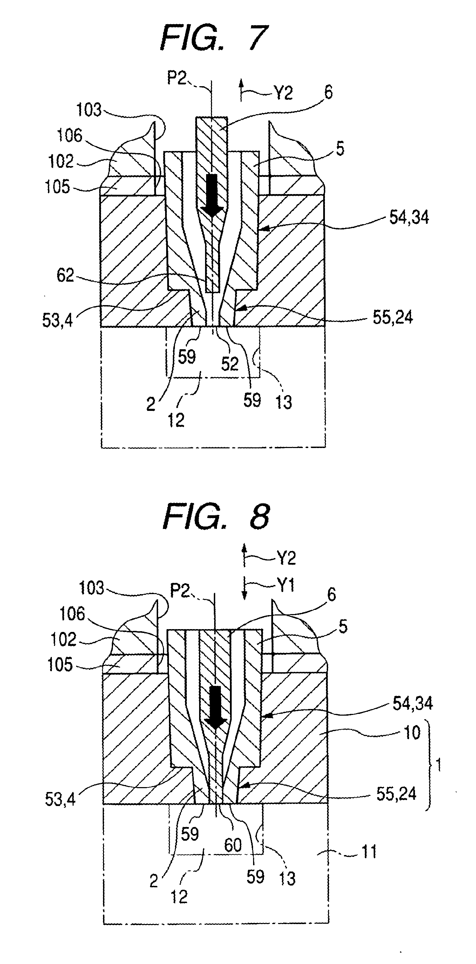

Next, as shown in Fig. 7, the nozzle pin 6 is moved in the direction of the arrow Y2 (upward) so as to be spaced apart from the split mold 10, and the tip opening 52 of the nozzle 5 is opened. In the state where the tip opening 52 of the nozzle 5 is thus opened, a pouring step of pouring injection molding material having fluidity through the nozzle hole 51 and the tip opening 52 into the molding cavity 12 at a predetermined injection molding pressure is executed by an injection molding machine (not-shown). Though the injection molding pressure is about 100MPa in a molded product by the related art, it can be reduced to about 50 MPa in a molded product in this exemplary embodiment. As described above, after the injection molding material has been poured into the molding cavity 12, a dwelling step of adding the pressure on the injection molding machine side to the injection molding material in the molding cavity 12 is executed in the state where the tip opening 52 of the nozzle 5 is opened.

After the dwelling step has been executed, as shown in Fig. 8, the nozzle pin 6 is moved toward the split mold 10 in the direction of the arrow Y1 (downward) thereby to close the tip opening 52 of the nozzle 5. Hereby, the injection molding ends. Next, the nozzle 5 is moved from the split mold 10 in the direction of the arrow Y2 (upward) together with the nozzle pin 6. Further, the split mold 10 and the opposing split mold 11 are released, and a molded product in the molding cavity 12 is taken out.

According to the second exemplary embodiment described above, the operational advantage similar to that in the first exemplary embodiment is obtained. Namely, in the injection molding time, the nozzle 5 having the nozzle pin 6 enters the inside of the large recess portion 3, and the contact surface 53 of the nozzle 5 is brought into contact with and mounted on the seating surface 4 of the split mold 10. From the tip opening 52 of the nozzle 5 which has thus entered the inside of the large recess portion 3 of the split mold 10, the resin-based injection molding material is directly supplied into the molding cavity 12 of the mold 1. Therefore, in the split mold 10 of the mold 1, the disuse of a sprue bush having a sprue can be realized. Further, disuse of a runner can be also realized. Therefore, product yield can be improved.

The disuse of the sprue bush and the runner can be realized as described above, which is advantageous to suppress cooling of the injection molding material. In this meaning, poor molding can reduced. Further, when the holding pressure step of applying the holding pressure to the injection molding material in the molding cavity 12 is executed, since the disuse of the sprue brush and the runner is realized, the efficiency of the holding pressure can improve, and the pressure in the dwelling step can be reduced more than that in the related art.

According to the second exemplary embodiment, as shown in Fig. 6, the nozzle tip surface 59 of the nozzle 5 kept at a relatively higher temperature than the split mold 10 faces directly the molding cavity 12 and forms the cavity mold surface 13. Accordingly, there is fear that cooling and hardening of the injection molding material near the nozzle tip surface 59 might be delayed. Thereafter, it is advantageous that: after the injection step and the dwelling step have ended, the temperature of the nozzle 5 is forcedly decreased. In this case, by an operation of letting refrigerant such as air blow flow in a cooling passage (not shown) formed near the small recess portion 2 of the split mold 10, the temperature of the nozzle 5 can be decreased.

According to the second exemplary embodiment, in the injection molding time, the tip portion of the nozzle 5 enters the small recess portion 2 of the split mold 10. Generally, the temperature of the nozzle 5 is relatively higher than the temperature of the split mold 10. Therefore, the resin-based injection molding material is restrained from being excessively cooled in the small recess portion 2 of the split mold 10, which can contribute to reduction of poor molding such as a gate vestige.

According to the second exemplary embodiment, as shown in Fig. 8, since both the pin tip surface 60 of the nozzle pin 6 and the nozzle tip surface 59 of the nozzle 5 form a part of the cavity mold surface 13, in case that a concave or convex mark part (marking) is formed on the pin tip surface 60 and the nozzle tip surface 59, the mark part can be transferred to a molded product in the injection molding time.

According to the second exemplary embodiment, tolerance between the outer diameter of the first nozzle guide surface 54 of the nozzle 5 and the inner diameter of the first guide surface 34 of the split mold 10 is set in a predetermined range, and facility in entry of the nozzle 5 is secured. Hereby, the tolerance is set so that the first nozzle guide surface 54 of the nozzle 5 is not forced into the first guide surface 34 of the split mold 10. Accordingly, when the nozzle 5 enters the first guide surface 34 of the large recess portion 3 of the split mold 10 of the nozzle 5, air in the large recess portion 3 is discharged well to the outside thereof, whereby it is prevented that the entry is impaired.

However, according to circumstances, the tolerance between the outer diameter of the first nozzle guide surface 54 of the nozzle 5 and the inner diameter of the first guide surface 34 of the split mold 10 can be set small. In this case, when the nozzle 5 enters the first guide surface 34 of the large recess portion 3 of the split mold 10, and the contact surface 53 of the nozzle 5 is mounted on the seating surface 4 of the split mold 10, though the air in the large recess portion 3 is discharged to the outside thereof, air cushion property is exhibited, and it can be expected that impact in seating is lowered.

[Third exemplary embodiment]

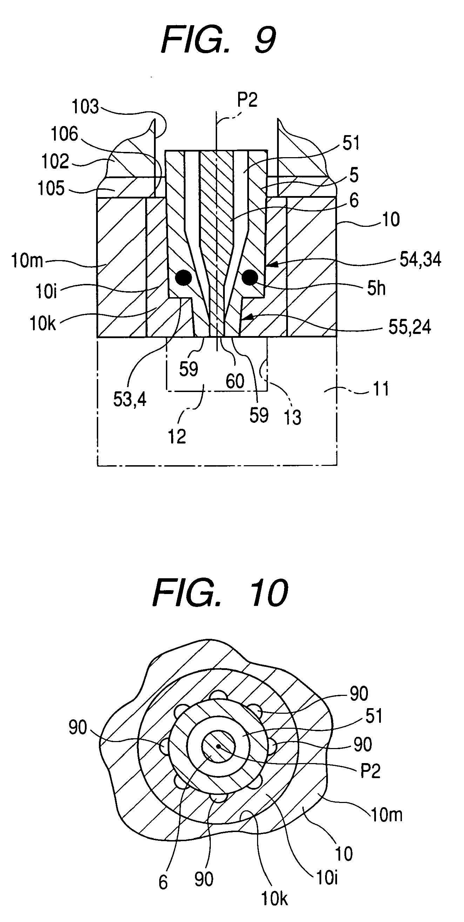

A third exemplary embodiment of the present invention will be described below with reference to Fig. 9. This exemplary embodiment has basically similar constitution to that in the second exemplary embodiment, and has the similar operational advantage to that in the second exemplary embodiment. Portions having common functions are denoted by common reference numerals. As shown in Fig. 9, a first nozzle guide surface 54 of a nozzle 5 comes or substantially comes into contact with a first guide surface 34 of a split mold 10. A second nozzle guide surface 55 of the nozzle 5 comes or substantially comes into contact with a second guide surface 24 of a small recess portion 2 of the split mold 10. Hereby, holding property and a posture of the nozzle 5 in the injection molding time are maintained. However, the heat of the nozzle 5 on the relatively high temperature side is readily taken by the split mold 10 on the relatively low temperature side. Therefore, according to the third exemplary embodiment, a heater 5h functioning as a heating element is embedded in the nozzle 5. When injection molding material is poured into a molding cavity 12, the heater 5h is switched on thereby to generate heat. It is advantageous that heat generation by the heater 5h is performed also in a dwelling step. Further, it is advantageous that: when the dwelling step ends, the heater 5h is switched off to promote cooling and hardening of the injection molding material.

Further, as shown in Fig. 9, the split mold 10 includes a main body 10m having a setting space 10k, and an insert mold 10i set inside the setting space 10k of the main body 10m. The insert mold 10i is exchangeably attached to the setting space 10k of the main body 10m by a not-shown fixture. The insert mold 10i has a first guide surface 34 and a second guide surface 24. The first guide surface 34 and the second guide surface 24 are easily to be worn away and damaged with the entry of the nozzle 5. In case that the first guide surface 34 and the second guide surface 24 are worn away and damaged, it is advantageous that the insert mold 10i is exchanged. Further, the material of the main body 10m and the material of the insert mold 10i may be different from each other, and the insert mold 10i may be formed of material which is lower in thermal conductivity than the material of the main body 10m. However, the present invention is not limited to this.

[Fourth exemplary embodiment]

A fourth exemplary embodiment of the present invention will be described with reference to Fig. 10. This exemplary embodiment has basically similar constitution to that in the second exemplary embodiment, and has the similar operational advantage to that in the second exemplary embodiment. Portions having common functions are denoted by common reference numerals. As shown in Fig. 10, a split mold 10 is composed of a main body 10m having a setting space 10k and having large mold volume, and an exchangeable insert mold 10i set inside the setting space 10k of the main body 10m. The insert mold 10i has mold volume which is smaller than that of the main body 10m, and has a first guide surface 34 and a second guide surface 24. In case that the first guide surface 34 and the second guide surface 24 which are easily to be worn away are damaged, it is advantageous that the insert mold 10i is exchanged.

Further, generally, the temperature of the split mold 10 is lower than the temperature of a nozzle 5. As shown in Fig. 10, at a portion facing the nozzle 5 of the insert mold 10i constituting the split mold 10, plural heat-insulated spaces 90 are formed, spaced around an axis P2. The heat-insulated space 90 extends in the extending direction of the axis P2. In this case, the heat of the nozzle 5 having the relatively high temperature into which melting injection molding material is poured is restrained from being transmitted to the split mold 10. Therefore, warmth retaining property of the nozzle 5 can improve. Further, in order to improve more the warmth retaining property of the nozzle 5 into which the melting injection molding material is poured, the material of the main body 10m and the material of the insert mold 10i may be different from each other, and the insert mold 10i may be formed of material which is lower in thermal conductivity than the material of the main body 10m. However, the present invention is not limited to this.

[Fifth exemplary embodiment]

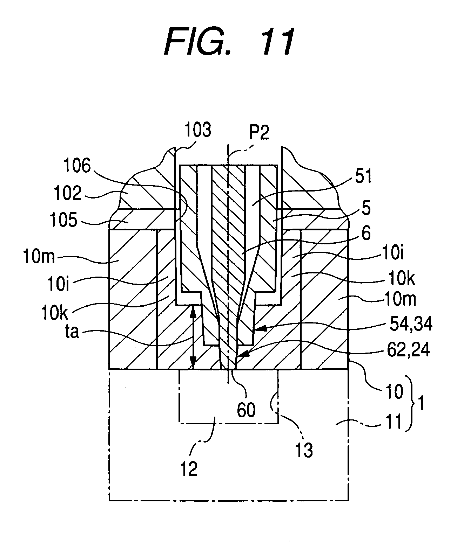

A fifth exemplary embodiment of the invention will be described with reference to Fig. 11. This exemplary embodiment has basically the similar constitution to that in the first exemplary embodiment, and has the similar operational advantage to that in the first exemplary embodiment. Portions having common functions are denoted by common reference numerals. As shown in Fig. 11, a split mold 10 includes a main body 10m having a setting space 10k and having large mold volume, and an exchangeable insert mold 10i set inside the setting space 10k of the main body 10m. The insert mold 10i has mold volume which is smaller than that of the main body 10m, and has a first guide surface 34 and a second guide surface 24. In case that the first guide surface 34 and the second guide surface 24 which are easily to be worn away are damaged, it is advantageous that the insert mold 10i is exchanged. Further, in order to improve warmth retaining property of the nozzle 5 into which melting injection molding material is poured, the material of the main body 10m and the material of the insert mold 10i may be different from each other, and the insert mold 10i may be formed of material which is lower in thermal conductivity than the material of the main body 10m. However, the present invention is not limited to this.

[Other exemplary embodiments]

According to exemplary embodiments described above, when the inclined angle θ1 of the first guide surface 34 to the axis P1 is compared with the inclined angle θ2 of the second guide surface 24 to the axis P1, θ1 is set smaller than θ2 (θ1 < θ2). However, the present invention is not limited to this, but θ1 may be set larger than θ2 (θ1 > θ2). According to the exemplary embodiments described above, the gate opening 20 penetrates the mold in the direction of gravity (direction of arrows Y1 and Y2), and the nozzle 5 moves in the direction of gravity (direction of the arrows Y1 and Y2). However, the present invention is not limited to this, but the gate opening 20 may penetrate the mold in the horizontal direction to move the nozzle 5 in the horizontal direction. Further, the gate opening 20 may penetrate the mold in an oblique direction in relation to the direction of gravity to move the nozzle 5 in the oblique direction in relation to the direction of gravity.

While the present invention has been shown and described with reference to certain exemplary embodiments thereof, it will be understood by those skilled in the art that various changes in form and details may be made therein without departing from the spirit and scope of the invention as defined by the appended claims.

The present invention can be utilized in injection molding of resin-based or rubber-based injection molding material.
An injection mold nozzle structure is provided. The injection mold nozzle structure includes a split mold and an opposing split mold which form a molding cavity for molding a molded product; a nozzle which includes a nozzle hole having a tip opening, from which injection molding material is injected into the molding cavity; and a nozzle pin which is movable with respect to the nozzle along an axis of the nozzle hole and is configured to open and close the tip opening of the nozzle hole according to the movement. The nozzle is enterable into a recess portion of the split mold. The nozzle pin includes a pin tip surface configured to face the molding cavity and form a part of a surface of the molding cavity when the nozzle enters the large recess portion.

## Claims

1. An injection mold nozzle structure comprising:
a split mold (10) and an opposing split mold (11) which form a molding cavity (12) for molding a molded product;
a nozzle (5) which has a cylindrical shape and includes a nozzle hole (51) having a tip opening (52), from which injection molding material is injected into the molding cavity (12); and
a nozzle pin (6) which is movable with respect to the nozzle (5) along an axis (P2) of the nozzle hole (51) and is configured to open and close the tip opening (52) of the nozzle hole (51) according to the movement,
wherein the split mold (10) includes:
a small recess portion (2) including a gate opening (20) which faces the molding cavity (12);
a large recess portion (3) communicating with the small recess portion (2) and including an entry opening at opposite side to the molding cavity (12), the entry opening having an inner diameter larger than that of the gate opening (20); and
a seating surface (4) extending in a centrifugal direction about an axis (P1) of the large recess portion (3),
wherein the nozzle (5) is enterable into the large recess portion (3) from the entry opening so that at least part of the nozzle (5) is housed in the large recess portion (3) and includes a contact surface (53) configured to contact with and mounted on the seating surface (4) when the nozzle (3) enters the large recess portion (3), and
wherein the nozzle pin (6) includes a pin tip surface (60) configured to face the molding cavity (12) and form a part of a surface of the molding cavity (12) when the nozzle (5) enters the large recess portion (3).

2. The injection mold nozzle structure according to claim 1,
wherein a heat-insulated space (B0b) for suppressing heat transmission from the nozzle (3) to the split mold (10) at an injection molding time is formed between an outer peripheral of the nozzle (5) and an inner peripheral of the large recess portion (3).

3. The injection mold nozzle structure according to claim 1 or 2,
wherein a tip surface (59) of the nozzle (5) faces the molding cavity (12) and forms a part of the surface of the molding cavity (12) at an injection molding time.

4. The injection mold nozzle structure according to any one of claims 1 to 3,
wherein, when the tip opening (52) of the nozzle hole (51) is closed by the nozzle pin (6), a tip portion of the nozzle pin (6) enters the small recess portion (2) and a tip portion of the nozzle (5) does not enter the small recess portion (2).

5. The injection mold nozzle structure according to any one of claims 1 to 3,
wherein, when the tip opening (52) of the nozzle hole (51) is closed by the nozzle pin (6), both of a tip portion of the nozzle pin (6) and a tip portion of the nozzle (5) enters the small recess portion (2), and
wherein both of the pin tip surface of the nozzle pin (6) and the tip surface of the nozzle (5) face the molding cavity (12) and form a part of the surface of the molding cavity (12).
